# EUROPÄISCHE PATENTANMELDUNG

(11) **EP 4 335 585 A1**
(43) Veröffentlichungstag der Anmeldung: **13.03.2024**
(21) Anmeldenummer: 23196126.9
(22) Anmeldetag: 08.09.2023
(51) Int. Cl.: B23Q 11/00

(54) **VORRICHTUNG ZUR SPÄNEABFÜHRUNG FÜR EINE WERKZEUGMASCHINE UND FERTIGUNGSSYSTEM**

(30) Priorität: 12.09.2022 DE 102022123232
(71) Anmelder: CHIRON Group SE, 78532 Tuttlingen (DE)
(72) Erfinder: Kohler, Markus, 78194 Immendingen (DE); Maret, Dylan, 1920 Martigny (CH)
(74) Vertreter: Witte, Weller & Partner Patentanwälte mbB

(57) **Zusammenfassung**

Eine Vorrichtung (70) zur Späneabführung für eine Werkzeugmaschine (10) weist einen verfahrbaren Spänewagen (90) mit einer Aufnahme (110) für einen aus dem Spänewagen (90) entnehmbaren Spänekorb (112), einen in eine Einhausung (64) der Werkzeugmaschine (10) integrierten Spänewagen-Stellplatz (72) für den Spänewagen (90), insbesondere unterhalb eines Arbeitsraums (24) der Werkzeugmaschine (10), und ein Verbindungsstück (94) zwischen einer Öffnung (114) des Spänekorbs (112) und einer Spanabführöffnung (158) des Arbeitsraums (24) zur Spanabführung aus dem Arbeitsraum (24), auf. Das Verbindungsstück (94) ist zwischen einer Freigabestellung, in der der Spänewagen (90) aus dem Spänewagen-Stellplatz (72) heraus verfahrbar ist, und einer Betriebsstellung, in der das Verbindungsstück (94) und der Spänewagen (90) zum Spänetransfer aus dem Arbeitsraum (24) in den Spänewagen (90) gekoppelt sind, verlagerbar. Ein Fertigungssystem (60) für die spanende Fertigung weist eine Werkzeugmaschine (10) und eine Vorrichtung (70) zur Späneabführung auf.

## Beschreibung

Die vorliegende Offenbarung bezieht sich auf eine Vorrichtung zur Späneabführung für eine Werkzeugmaschine sowie auf ein Fertigungssystem mit einer Werkzeugmaschine und einer Vorrichtung zur Späneabführung. Gemäß verschiedenen Aspekten bezieht sich die vorliegende Offenbarung auf kompakt gestaltete Werkzeugmaschinen sowie deren Integration in Fertigungssysteme und Anlagen zur spanenden Fertigung. Kompakt gestaltete Werkzeugmaschinen sind beispielsweise solche mit einem Arbeitsraum, der kleiner als 250 mm x 250 mm x 250 mm ist.

In beispielhaften Ausgestaltungen ist der Arbeitsraum der Werkzeugmaschine kleiner als 200 mm x 200 mm x 200 mm. In beispielhaften Ausgestaltungen ist der Arbeitsraum der Werkzeugmaschine kleiner als 150 mm x 150 mm x 150 mm. In beispielhaften Ausgestaltungen ist der Arbeitsraum der Werkzeugmaschine kleiner als 100 mm x 100 mm x 100 mm. In beispielhaften Ausgestaltungen ist der Arbeitsraum der Werkzeugmaschine kleiner als 75mm x 75 mm x 75 mm. Diese Angaben betreffen insbesondere die möglichen Vorschübe (Verfahrwege) entlang der X, Y sowie der Z-Achse. Der Arbeitsraum kann würfelförmig gestaltet sein. Es sind jedoch auch quaderförmige Bauräume denkbar, deren Verfahrwege in X, Y sowie Z nicht einheitlich sind. Beispielhaft eignen sich derartig gestaltete Werkzeugmaschinen für die feinmechanische Bearbeitung, beispielsweise im Rahmen der Herstellung von Uhren, Schmuck und ähnlichem. Es versteht sich, dass auch andere Anwendungen denkbar sind, etwa im Bereich der Medizintechnik, Präzisionstechnik und dgl.

Werkzeugmaschinen und Anlagen zur spanenden Fertigung sind bekannt. Aus der US 2019/0084102 A1 ist eine Fertigungsanlage bekannt, die eine Mehrzahl übereinander und nebeneinander angeordneter kompakt gestalteter Werkzeugmaschinen aufweist, die in einer gemeinsamen Einhausung angeordnet sind, wobei zusätzlich ein Roboter für den Werkzeugwechsel und/oder Werkstückwechsel vorgesehen ist. In der Einhausung ist ferner ein System zum Auffangen von Spänen angeordnet.

Aus der EP 2 394 778 A1 ist ein vertikales Bearbeitungszentrum bekannt, das einen Arbeitsbereich aufweist, in dem eine vertikal orientierte Werkzeugspindel angeordnet ist, wobei der Arbeitsbereich nach unten hin eine trichterförmige Verjüngung mit einer bodenseitigen Öffnung aufweist, über die Späne und dergleichen aus dem Arbeitsbereich herausfallen können. Unterhalb der bodenseitigen Öffnung ist ein (angetriebener) Späneförderer angeordnet, der aus dem Arbeitsbereich herausfallende Späne horizontal und vertikal in einen Bereich hinter dem Bearbeitungszentrum fördert, wobei die Späne dort von oben an einen fahrbaren Spänewagen übergeben werden.

Es hat sich gezeigt, dass beispielhaft mit einer kompakt gestalteten Werkzeugmaschine auch bei relativ kleinen Außenabmessungen der Werkzeugmaschine die gewünschten Bauteile mit hoher Präzision und Effizienz gefertigt werden können.

Es hat sich jedoch auch gezeigt, dass unter Automatisierungsaspekten bei kompakt gestalteten Werkzeugmaschinen besondere Randbedingungen zu berücksichtigen sind. Zum einen können Transfersysteme, Handhabungseinheiten und Ähnliches nicht beliebig kompakt gestaltet werden. Selbst wenn dies technologisch möglich wäre, so gibt es in der Praxis häufig bestimmte Mindestabmessungen für Transfersysteme, Handhabungseinheit, Roboter, Greifer und ähnliches. Dasselbe gilt für die Handhabung von Spänen, Kühlschmierstoffen (KSS) und dergleichen.

Dies führt unter Umständen dazu, dass die eigentliche Werkzeugmaschine (bzw. deren Arbeitsraum) klein in Relation zur Automatisierungstechnik (Handhabungstechnik, Transfersysteme, Späne-Management, KSS-Management und Ähnliches) ist.

Ferner hat sich gezeigt, dass auch bei kompakt gestalteten Werkzeugmaschinen häufig der Wunsch nach einer Möglichkeit zur direkten visuellen Überwachung durch den Bediener besteht. Ähnlich wie bei Werkzeugmaschinen größerer Bauart werden regelmäßig Zugangsöffnungen (Türen) mit Scheiben gefordert. Dies führt in einer automatisierten Anlage dazu, dass dieser Bereich ("Vorderseite" der Werkzeugmaschine) gerade nicht für die Automatisierungstechnik und weitere Komponenten zur Verfügung steht.

Ferner hat sich gezeigt, dass kompakt gestaltete Werkzeugmaschinen häufig klein im Verhältnis zu marktüblicher Automatisierungstechnik gestaltet sind. Dies resultiert in spezifischen Anforderungen für die Automatisierung kompakt gestalteter Werkzeugmaschinen. Ferner ergeben sich neue Möglichkeiten für die Automatisierung und Verkettung, die gegebenenfalls mit konventionellen Werkzeugmaschinen nicht umsetzbar waren.

Der vorliegenden Offenbarung liegt die Aufgabe zugrunde, eine Vorrichtung zur Späneabführung für eine Werkzeugmaschine anzugeben, die insbesondere für kompakte Werkzeugmaschinen geeignet ist. Die Vorrichtung soll möglichst besondere Rahmenbedingungen bei kompakt gestalteten Werkzeugmaschinen berücksichtigen. Mithilfe der Vorrichtung sollen sich Fertigungssysteme realisieren lassen, die auch bei nur kleinem Bauraum eine teilautomatisierte oder gar hochautomatisierte Fertigung ermöglichen. Dies bezieht sich beispielhaft auf das Auffangen und die Handhabung von Spänen. Die Vorrichtung soll möglichst eine hinreichende Kapazität zur Aufnahme von Spänen bereitstellen, so dass ein zumindest zeitweise autarker oder autonomer Betrieb der Werkzeugmaschine ermöglicht ist.

Die Vorrichtung soll einen Behälter zur Aufnahme von Spänen bereitstellen, wobei im Falle eines vollen Behälters ein schneller Wechsel ermöglicht sein soll. Schließlich soll im Rahmen der vorliegenden Offenbarung ein Fertigungssystem angegeben werden, das eine Werkzeugmaschine und eine Vorrichtung zur Späneabführung aufweist. Das Fertigungssystem soll insgesamt kompakt und bedienerfreundlich gestaltet sein.

Gemäß einem ersten Aspekt bezieht sich die vorliegende Offenbarung auf eine Vorrichtung zur Späneabführung für eine Werkzeugmaschine, die Folgendes aufweist:
- einen verfahrbaren Spänewagen mit einer Aufnahme für einen aus dem Spänewagen entnehmbaren Spänekorb,
- einen in eine Einhausung der Werkzeugmaschine integrierten Spänewagen-Stellplatz für den Spänewagen, insbesondere unterhalb eines Arbeitsraums der Werkzeugmaschine, und
- ein Verbindungsstück zwischen einer Öffnung des Spänekorbs und einer Spanabführöffnung des Arbeitsraums zur Spanabführung aus dem Arbeitsraum, wobei das Verbindungsstück zwischen einer Freigabestellung, in der der Spänewagen aus dem Spänewagen-Stellplatz heraus verfahrbar ist, und einer Betriebsstellung, in der das Verbindungsstück und der Spänewagen zum Spänetransfer aus dem Arbeitsraum in den Spänewagen gekoppelt sind, verlagerbar ist.

Auf diese Weise kann ein Spänetransfer auf möglichst direktem Wege, idealerweise ohne zusätzlichen (angetriebenen) Späneförderer zwischen dem Arbeitsraum und dem Spänewagen erfolgen. Dies erlaubt insgesamt eine kompakte Bauweise, auch unter Berücksichtigung der Automatisierungstechnik sowie von Nebenfunktionen der Werkzeugmaschine.

Die Verbindung zwischen dem Arbeitsraum der Werkzeugmaschine und dem Spänewagen ist hinreichend dicht, so dass die Verschmutzungsneigung beim Betrieb der Werkzeugmaschine in der Betriebsstellung des Verbindungsstücks gering ist. In der Freigabestellung kann der Spänewagen einfach aus seinem Stellplatz herausgefahren werden. Beispielhaft kann ein Spänewagen mit gefülltem Spänekorb insgesamt durch einen neuen mit leerem Spänekorb ersetzt werden. Es ist jedoch auch vorstellbar, den Spänekorb des Spänewagens zu leeren und/oder durch einen leeren Spänekorb zu ersetzen.

In einer beispielhaften Ausgestaltung verbleibt das Verbindungsstück beim Stellplatz, wenn der Spänewagen aus dem Stellplatz herausgefahren ist. Gemäß dieser Ausgestaltung ist das Verbindungsstück permanent mit der Werkzeugmaschine gekoppelt.

In der Betriebsstellung ist das Verbindungsstück hinreichend dicht mit dem Spänewagen gekoppelt. Dies umfasst beispielhaft eine spänedichte Kopplung und insbesondere auch eine hinreichend KSS-dichte Kopplung des Verbindungsstücks mit dem Spänewagen. Auf diese Weise wird eine Verschmutzung der Werkzeugmaschine und ihrer unmittelbaren Umgebung mit Spänen und oder KSS (Kühlschmierstoffen) wirksam reduziert oder vermieden.

Der Spänewagen kann von der Einhausung umschlossen sein, wenn die Werkzeugmaschine zur Bearbeitung von Werkstücken betrieben wird. Auf diese Weise ergibt sich eine integrale Gestaltung. Beispielhaft weist die Einhausung eine Tür auf, durch die der Spänewagen in den Stellplatz einfahren kann, wenn das Verbindungsstück in der Freigabestellung ist. Demgemäß hat der Spänewagen ein Fahrwerk. Der Spänewagen ist rollbar/fahrbar.

In einer beispielhaften Ausgestaltung erfolgt der Wechsel des Spänewagens von vorne. Der Spänewagen kann an einer Vorderseite der Werkzeugmaschine in den Stellplatz hinein oder aus diesem heraus gefahren werden. Das ist eine Abkehr von Maschinenprinzipien mit Späneförderer und Spänewagen, bei denen ein Spänetransport nach hinten oder zur Seite erfolgt. Dies vereinfacht die Bedienung der Werkzeugmaschine, weil wesentliche Komponenten von ein und derselben Seite (Vorderseite, Bedienerseite) bedient werden können.

Die Vorrichtung dient zur Handhabung von Spänen (auch bezeichnet als: Späne-Management). Dies umfasst das Auffangen von Spänen und zumindest teilweise auch das Auffangen von KSS-Fluid, das an den Spänen anhaftet. Sowohl Späne als auch KSS-Fluid können zumindest teilweise wiederverwendet oder recycelt werden.

Der Spänetransfer aus dem Arbeitsraum in den Spänewagen erfolgt ohne zusätzlichen Späneförderer. Beispielhaft können Späne schwerkraftunterstützt aus dem Arbeitsraum heraus in den Spänekorb des Spänewagens fallen.

Gemäß einer beispielhaften Ausgestaltung weist der Spänewagen einen säulenförmig gestalteten Aufbau auf, wobei das Verbindungsstück oberhalb des Spänewagens und unterhalb des Arbeitsraums sitzt. Dies gilt zumindest dann, wenn sich ein Spänewagen im Stellplatz befindet. Mit anderen Worten kann der Spänewagen gemäß dieser Ausgestaltung unterhalb des Arbeitsraums der Werkzeugmaschine platziert werden. Dies erleichtert den Spänetransfer, Späne können fallend aus dem Arbeitsraum herausgeführt werden und erreichen den Spänewagen ohne zusätzlichen Antrieb. Der säulenartig gestaltete Aufbau weist in einer beispielhaften Ausgestaltung eine Höhe (in Z-Richtung) auf, die zumindest das Doppelte der Breite (in X-Richtung) und/oder das Doppelte der Tiefe (in Y-Richtung) des Aufbaus umfasst.

Eine kompakte Gestaltung der Werkzeugmaschine erlaubt eine Anordnung des Arbeitsraums in einer bestimmten Höhe über dem Boden, etwa aus Sicht eines Bedieners in Tischhöhe oder Stehhöhe. Auf diese Weise kann der Raum unter dem Arbeitsraum für weitere Funktionen genutzt werden, etwa für das Späne-Management.

Beispielhaft befindet sich der Arbeitsraum der Werkzeugmaschine im Oberbau eines Fertigungssystems mit einem schrankartig gestalteten Gehäuse. Beispielhaft befindet sich der Stellplatz für den Spänewagen in einem Unterbau eines Fertigungssystems mit einem schrankartig gestalteten Gehäuse.

In einer beispielhaften Ausgestaltung befindet sich der Stellplatz für den Spänewagen - von oben betrachtet - innerhalb des vom Arbeitsraum eingenommenen Querschnitts.

Gemäß einer weiteren beispielhaften Ausgestaltung ist aus Sicht der Spanabführöffnung des Arbeitsraums ein freier, schwerkraftunterstützter Spänetransfer in Richtung auf den Spänekorb entlang eines Spanabführpfades ermöglicht ist. Dies umfasst in beispielhaften Ausgestaltungen eine direkte, freie Verbindung (ohne Umlenkung) zwischen dem Arbeitsraum und dem Spänekorb des Spänewagens.

Gemäß einer weiteren beispielhaften Ausgestaltung erfolgt der Spänetransfer zwischen der Spanabführöffnung und dem Spänekorb antriebslos, wobei sich insbesondere der Spanabführpfad zwischen dem Arbeitsraum und dem Spänekorb im Wesentlichen vertikal erstreckt. Späne können frei in den Spänekorb fallen. Ein angetriebener Späneförderer ist nicht erforderlich.

Gemäß einer weiteren beispielhaften Ausgestaltung ist das Verbindungsstück vertikal verfahrbar, wobei ein Rastelement vorgesehen ist, das das Verbindungsstück bedarfsweise in der Freigabestellung sichert. Damit kann das Verbindungsstück gezielt in die Freigabestellung überführt werden, wenn ein Spänewagen oder ein Spänekorb gewechselt und/oder geleert werden soll.

Gemäß einer weiteren beispielhaften Ausgestaltung liegt das Verbindungsstück in der Betriebsstellung mit einer Dichtung, insbesondere einer umlaufenden Dichtung, auf einem Rand, insbesondere einem umlaufenden Rand, des Spänewagens auf, wobei das Verbindungsstück eine Mündung in Richtung auf den Spänekorb aufweist, die in der Betriebsstellung von oben in die Öffnung des Spänekorbs hineinragt.

Auf diese Weise wird die Verschmutzungsneigung weiter verringert. Das Verbindungsstück kann durch sein Eigengewicht mit der Dichtung hinreichend dicht auf dem Rand des Spänewagens aufliegen. Gleichwohl ist ein einfaches Entkoppeln des Verbindungsstücks vom Spänewagen ermöglicht.

Gemäß einer weiteren beispielhaften Ausgestaltung weist der Spänewagen entlang seiner vertikalen Erstreckung ein Fahrwerk, einen KSS-Handhabungsabschnitt und die Aufnahme für den Spänekorb auf, wobei der KSS-Handhabungsabschnitt zwischen dem Fahrwerk und der Aufnahme angeordnet ist, wobei die Aufnahme den Spänekorb mehrseitig dicht umschließt, und wobei der KSS-Handhabungsabschnitt eine Bedienöffnung aufweist, die auch bei auf dem Spänewagen-Stellplatz angeordnetem Spänewagen für einen Bediener zugänglich ist. Dies umfasst gegebenenfalls ein Öffnen einer Tür der Einhausung.

Auf diese Weise kann der Spänewagen einfach von einem KSS-Behälter entkoppelt werden, so dass auch in dieser Hinsicht ein Entleeren oder Wechseln mit geringem Aufwand vonstattengehen kann. Ein Herausfahren des Spänewagens aus dem Stellplatz umfasst beispielsweise ein Öffnen einer Tür der Einhausung, ein Bewegen des Verbindungsstücks in die Freigabestellung sowie ein Trennen einer KSS-Abführleitung im KSS-Handhabungsabschnitt.

Gemäß einer weiteren beispielhaften Ausgestaltung ist im KSS-Handhabungsabschnitt eine KSS-Abführleitung mit einer Schnellkupplung angeordnet, die durch die Bedienöffnung hindurch bedienbar ist. Auf diese Weise kann KSS-Fluid aufgefangen werden, das den Spänen zuvor noch beigemengt war.

Gemäß einer weiteren beispielhaften Ausgestaltung ist zumindest die Aufnahme des Spänewagens oberhalb einer verfahrbaren KSS-Wanne angeordnet, wobei die KSS-Wanne zumindest eine Aussparung für den Spänewagen, insbesondere für ein Fahrwerk des Spänewagens aufweist. Mit anderen Worten ist im betriebsfähigen Zustand der Spänekorb des Spänewagens zwischen dem Arbeitsraum (bzw. dem Verbindungsstück) und der KSS-Wanne angeordnet. Die KSS-Wanne ist unterhalb des Spänekorbs angeordnet. Der Spänekorb ist unterhalb des Arbeitsraums angeordnet. Die zumindest eine Aussparung für den Spänewagen bei der KSS-Wanne erlaubt ein Einfahren und Ausfahren des Spänewagens. Sowohl die KSS-Wanne als auch der Spänewagen können bodenseitig aufgenommen sein, etwa über ein jeweiliges Fahrwerk oder Gestell.

Gemäß einer weiteren beispielhaften Ausgestaltung weist die Vorrichtung ferner einen Unterflur-Stellplatz für die verfahrbare KSS-Wanne auf, wobei die KSS-Wanne aus dem Unterflur-Stellplatz herausfahrbar ist, wenn der Spänewagen aus dem Spänewagen-Stellplatz herausgefahren ist. Auf diese Weise kann auch die KSS-Wanne einfach gewechselt und/oder entleert werden. Der Bauraum unterhalb des Arbeitsraums der Werkzeugmaschine wird gut ausgenutzt. Die kompakte Bauweise der Werkzeugmaschine bleibt erhalten.

Gemäß einer weiteren beispielhaften Ausgestaltung sind die KSS-Wanne und das Fahrwerk des Spänewagens zumindest abschnittsweise miteinander verschränkt angeordnet. Dies bezieht sich insbesondere auf die Nutzung des Raums unterhalb des Arbeitsraums der Werkzeugmaschine im Bereich des Bodens. Der Begriff Verschränkung bezieht sich auf eine geometrische Verschränkung (vergleiche verschränkte Finger). Die Verschränkung erlaubt die bodenseitige Führung und Verfahrbarkeit sowohl des Spänewagens als auch der KSS-Wanne.

In einer beispielhaften Ausgestaltung stellt die KSS-Wanne zumindest eine Führung für den Spänewagen bereit, in die der Spänewagen mit seinem Fahrwerk beim Einfahren in den Stellplatz einfahren kann.

Gemäß einer weiteren beispielhaften Ausgestaltung umfasst das Fahrwerk des Spänewagens zumindest drei Rollen, deren Verbindungspunkte mit dem Fahrwerk eine erste Fläche aufspannen, wobei die KSS-Wanne ein Fahrwerk mit zumindest drei Rollen aufweist, deren Verbindungspunkte mit dem Fahrwerk eine zweite Fläche aufspannen, und wobei sich die erste Fläche und die zweite Fläche in einer Draufsicht zumindest teilweise überlappen. Üblicherweise sind die durch die jeweils zumindest drei Rollen aufgespannten Flächen Horizontalflächen. Die Flächen überlappen sich zumindest teilweise, auch dies zeigt, dass der Bauraum unter dem Arbeitsraum der Werkzeugmaschine günstig genutzt wird. Die Draufsicht umfasst eine Betrachtung entlang der Vertikalen (von oben oder von unten entlang der Z-Achse)

Gemäß einer weiteren beispielhaften Ausgestaltung weist die KSS-Wanne einen KSS-Behälter auf, der in einer Draufsicht zumindest abschnittsweise U-förmig gestaltet ist und von der Aussparung unterbrochen ist, die für zumindest einen Abschnitt des Fahrwerks des Spänewagens zugänglich ist. Die Draufsicht erfolgt entlang einer vertikalen Achse und zeigt demgemäß Horizontalebenen der Vorrichtung.

Beispielhaft dient die Aussparung zur Aufnahme zweier rechter oder zweier linker Rollen des Fahrwerks des Spänewagens, wobei die beiden Rollen eine Spur bilden.

Gemäß einer weiteren beispielhaften Ausgestaltung nimmt die KSS-Wanne in einer Draufsicht eine Grundfläche ein, die zumindest 50 % größer als die Grundfläche des Spänewagens (bzw. des Spänekorbs) ist. In einer weiteren beispielhaften Ausgestaltung nimmt die KSS-Wanne in der Draufsicht eine Grundfläche ein, die zumindest 100 % größer als die Grundfläche des Spänewagens (bzw. des Spänekorbs) ist.

Gemäß einer weiteren beispielhaften Ausgestaltung nimmt der Spänekorb eine vertikale Erstreckung ein, die zumindest 50 % größer als die vertikale Erstreckung der KSS-Wanne (bzw. des KSS-Behälters) ist. Gemäß einer weiteren beispielhaften Ausgestaltung nimmt der Spänekorb eine vertikale Erstreckung ein, die zumindest 100 % oder gar 200% größer als die vertikale Erstreckung der KSS-Wanne (bzw. des KSS-Behälters) ist.

Auf diese Weise kann die KSS-Wanne flach gestaltet sein und gleichwohl eine hohe Kapazität aufweisen. Das KSS-Fluid kann in die KSS-Wanne fließen und sich dort verteilen. Der Spänewagen weist hingegen eine größere vertikale Erstreckung für den Spänekorb auf, so dass auch dort eine hohe Kapazität gegeben ist. Späne können im Spänekorb übereinander angesammelt und gespeichert werden.

Gemäß einem weiteren Aspekt bezieht sich die vorliegende Offenbarung auf eine Kombination aus einer offenbarungsgemäßen Spanabführvorrichtung und einer offenbarungsgemäßen Werkzeugmaschine.

Ferner bezieht sich die vorliegende Offenbarung auf ein Fertigungssystem für die spanende Fertigung, insbesondere zur Herstellung feinmechanischer Werkstücke, das Folgendes aufweist:
- zumindest eine insbesondere kompakt gestaltete Werkzeugmaschine, die zur Mehrachsbearbeitung ausgebildet ist, und die einen Werkzeughalter und einen Werkstückhalter aufweist, die relativ zueinander in einem Arbeitsraum der Werkzeugmaschine in zumindest drei Achsen verfahrbar sind, und
- eine Vorrichtung zur Späneabführung gemäß zumindest einer der hierin gezeigten Ausgestaltungen, die zumindest im Wesentlichen unterhalb des Arbeitsraums angeordnet ist.

Insbesondere können auf diese Weise im Arbeitsraum anfallende Späne direkt und ohne Späneförderer in einen Spänekorb des Spänewagens geleitet werden. Beim Betrieb der Werkzeugmaschine anfallende Späne können im Spänewagen gesammelt werden. Der Spänewagen selbst bzw. der im Spänewagen aufgenommene Spänekorb kann schnell und einfach gewechselt bzw. geleert werden.

Der Spänewagen beansprucht in erster Linie einen Bauraum unterhalb des Arbeitsraums der Werkzeugmaschine, dort kann auch eine KSS-Wanne angeordnet sein. Die Vorderseite des Arbeitsraums ist daher zumindest in beispielhaften Ausgestaltungen frei und für einen Bediener einsehbar und zugänglich. Die Vorderseite kann auch als Bedienerseite bezeichnet werden. Die Vorderseite ist der Rückseite gegenüberliegend angeordnet. Seitliche Seiten des Arbeitsraums stehen für die Handhabung (Werkstückwechsel, Werkzeugwechsel) zur Verfügung. Auf diese Weise wird der kompakten Bauart Rechnung getragen.

Beispielhaft umfasst das Fertigungssystem eine Mehrzahl von Spänewagen, von denen einer in den Stellplatz unter der Werkzeugmaschine eingefahren ist. Ein Wechsel des Spänewagens kann dann schnell durch einen Austausch eines vollen Wagens gegen einen leeren Wagen erfolgen. Es ist selbstverständlich auch vorstellbar, lediglich den Spänekorb zu wechseln. Auf diese Weise kann bei vollem Spänekorb die Betriebsfähigkeit der Werkzeugmaschine schnell wiederhergestellt werden.

Gemäß einer weiteren beispielhaften Ausgestaltung weist der Spänewagen in einer Draufsicht einen Querschnitt auf, der innerhalb einer Projektion eines Umrisses des Arbeitsraums der Werkzeugmaschine liegt. Auf diese Weise vergrößert der Spänewagen den Grundriss des Fertigungssystems nicht oder nur unwesentlich.

Gemäß einer weiteren beispielhaften Ausgestaltung weist das Fertigungssystem eine schrankartige Einhausung auf, die ein Oberteil und ein Unterteil umgibt, wobei die Werkzeugmaschine mit ihrem Arbeitsraum im Oberteil angeordnet ist, und wobei der Spänewagen im Unterteil unterhalb des Arbeitsraums der Werkzeugmaschine angeordnet ist. In einer beispielhaften Ausgestaltung umfasst das Fertigungssystem ein gemeinsames Gehäuse (auch: Einhausung) für die Werkzeugmaschine und den Stellplatz des Spänewagens.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile der Offenbarung ergeben sich aus der nachfolgenden Beschreibung und Erläuterung mehrerer beispielhafter Ausführungsformen unter Bezugnahme auf die Zeichnungen. Es zeigen:
- Fig. 1:: eine perspektivische Ansicht einer Werkzeugmaschine;
- Fig. 2:: eine perspektivische Ansicht eines Fertigungssystems mit einer Werkzeugmaschine und einer Vorrichtung zur Späneabführung, die in einer gemeinsamen Einhausung angeordnet sind;
- Fig. 3:: eine auf Fig. 2 beruhende perspektivische Teilansicht des Fertigungssystems mit aus einer Bedienersicht geöffneten Türen eines Arbeitsraums der Werkzeugmaschine sowie eines Spänewagen-Stellplatzes der Späneabführvorrichtung;
- Fig. 4:: eine auf Fig. 3 beruhende Teilansicht, wobei ein Spänewagen aus dem Spänewagen-Stellplatz herausgefahren ist, und wobei ein Spänekorb dem Spänewagen entnommen ist;
- Fig. 5:: eine auf Fig. 3 und Fig. 4 beruhende Ansicht unter Auslassung der Einhausung;
- Fig. 6:: eine Ansicht des Fertigungssystems von unten her, zur Veranschaulichung einer Verschachtelung zwischen einem Spänewagen und einer KSS-Wanne, die gemeinsam innerhalb einer Einhausung des Fertigungssystems angeordnet sind;
- Fig. 7:: eine auf Fig. 6 beruhende Ansicht, wobei der Spänewagen und die KSSWanne aus der Einhausung herausgefahren sind;
- Fig. 8:: eine Schnittansicht durch ein Verbindungsstück zwischen einem Arbeitsraum einer Werkzeugmaschine sowie einem Spänewagen einer Späneabführvorrichtung, wobei das Verbindungsstück in einer Freigabestellung ist; und
- Fig. 9:: eine auf Fig. 8 beruhende Darstellung, wobei das Verbindungsstück in Fig. 9 in einer Betriebsstellung ist, um den Spänewagen funktional anzukoppeln.

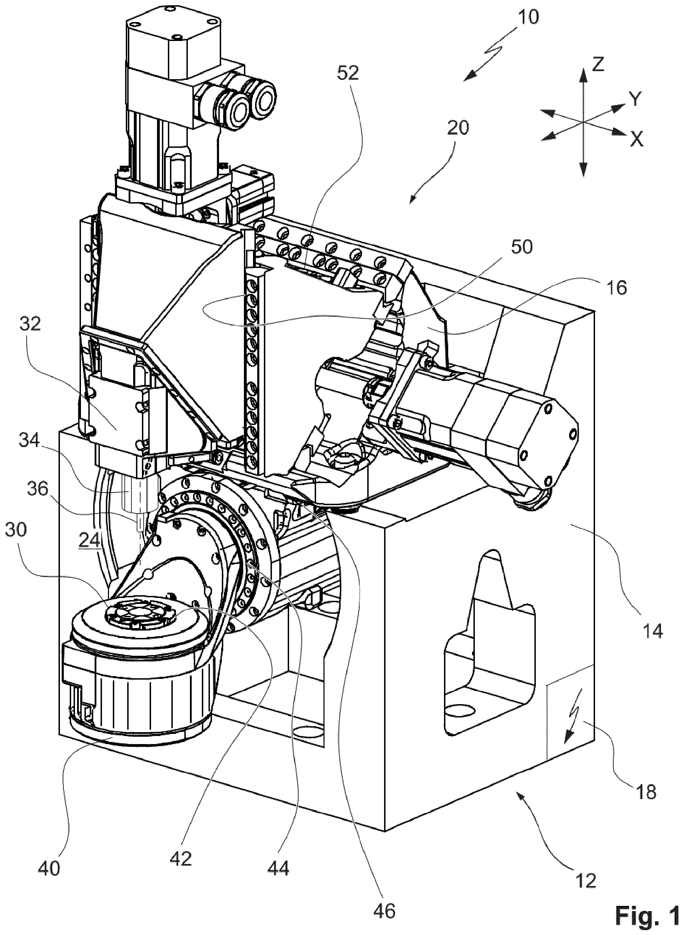

Fig. 1 veranschaulicht anhand einer perspektivischen Darstellung eine beispielhafte Ausgestaltung einer kompakt gestalteten Werkzeugmaschine 10, die sich zur Herstellung feinmechanischer Bauteile eignet. Die Werkzeugmaschine 10 umfasst ein Gestell 12, das im Ausführungsbeispiel ein Untergestell 14 umfasst, auf dem ein Gestellblock 16 gelagert ist. Wesentliche Kräfte, die bei der Bearbeitung entstehen, werden vom Gestellblock 16 aufgenommen. Das Untergestell 14 dient als Auflage für den Gestellblock 16. In Fig. 1 ist ferner mit 18 eine Steuereinrichtung der Werkzeugmaschine 10 angedeutet. Die Steuereinrichtung 18 steuert Komponenten und Funktionen der Werkzeugmaschine 10, um Werkstücke in der gewünschten Weise zu bearbeiten. Auch eine Steuerung über externe Einrichtungen ist vorstellbar.

Die Werkzeugmaschine 10 umfasst ferner eine Kinematik 20, die als Mehrachs-Kinematik gestaltet ist. In zumindest einigen der gezeigten Figuren ist aus Veranschaulichungsgründen ein kartesisches Koordinatensystem X-Y-Z gezeigt. Das Koordinatensystem X-Y-Z umfasst eine X-Achse (Seitenrichtung), eine Y-Achse (Tiefenrichtung), und eine Z-Richtung (Höhenrichtung). Die X-Achse und die Y-Achse sind im Ausführungsbeispiel horizontale Achsen. Die Z-Achse ist im Ausführungsbeispiel eine vertikale Achse. Die Achsen X-Y-Z stehen orthogonal aufeinander. Das Koordinatensystem X-Y-Z dient in erster Linie zur Veranschaulichung und Beschreibung von Komponenten und Funktionen der Werkzeugmaschine 10. Es versteht sich, dass zu diesen Zwecken auch andere Koordinatensysteme verwendbar sind. Das Koordinatensystem X-Y-Z ist daher nicht einschränkend zu verstehen. Der Fachmann kann die erforderlichen gedanklichen Schritte zur Überführung in andere Koordinatensysteme ohne weiteres durchführen.

Die Kinematik 20 umfasst im Ausführungsbeispiel verschiedene Bauteile, die mittelbar oder unmittelbar am Gestellblock 16 gelagert sind. Dies sorgt für kurze Kraftwege und eine hohe Steifigkeit. In Fig. 1 ist ferner mit 24 ein Arbeitsraum angedeutet, in dem die Bearbeitung mit der Werkzeugmaschine 10 stattfindet.

Die Werkzeugmaschine 10 umfasst ferner einen Werkstückhalter (auch: Werkstückaufnahme) 30 zur Aufnahme zumindest eines zu bearbeitenden Werkstücks. Ferner ist eine Werkzeugspindel 32 vorgesehen. Die Werkzeugspindel 32 umfasst einen Werkzeughalter 34, der zur Aufnahme eines Werkzeugs 36 ausgebildet ist. Das Werkzeug 36 ist rotatorisch antreibbar, um ein vom Werkstückhalter 30 gehaltenes Werkstück zu bearbeiten.

Der Werkstückhalter 30 sitzt im Ausführungsbeispiel auf einem einseitig geführten Ausleger 40, der einen Schwenkantrieb oder Drehantrieb 42 für den Werkstückhalter 30 beherbergt. Die auf diese Weise bereitgestellte rotatorische Achse kann auch als C-Achse bezeichnet werden. Der Ausleger 40 ist über einen weiteren Schwenkantrieb 44 mit einem Linearantrieb 46 gekoppelt, der wiederum am Gestellblock 16 gelagert ist. Der Schwenkantrieb 44 stellt eine rotatorische Achse bereit, die als B-Achse bezeichnet werden kann. Der Linearantrieb 46 stellt eine translatorische Achse bereit, die als Y-Achse bezeichnet werden kann.

Die Werkzeugspindel 32 ist über einen Linearantrieb 50 und einen Linearantrieb 52 mit dem Gestellblock 16 gekoppelt. Der Linearantrieb 50 stellt eine translatorische Achse bereit, die auch als Z-Achse bezeichnet werden kann. Der Linearantrieb 52 stellt eine translatorische Achse bereit, die auch als X-Achse bezeichnet werden kann. Die beiden Linearantriebe 50, 52 bilden einen Kreuzschlittenantrieb. Im Ausführungsbeispiel sind zwei translatorische Achsen (X, Z) der Werkzeugspindel 32 bzw. dem Werkzeug zugeordnet. Eine translatorische Achse (Y) ist dem Werkstückhalter 30 bzw. dem Werkstück zugeordnet. Ferner sind im Ausführungsbeispiel zwei rotatorische Achsen/Schwenkachsen (B, C) dem Werkstückhalter 30 bzw. dem Werkstück zugeordnet. Andere Arten der Zuordnung sind denkbar und vom Konzept der Maschinenkinematik abhängig.

Insgesamt stellt die Werkzeugmaschine 10 einen kompakten Arbeitsraum 24 bereit. Dies führt wiederum zu einer geringen Baugröße der Werkzeugmaschine 10, verbunden mit geringem Gewicht und geringem Energiebedarf. Gleichwohl kann aufgrund der konstruktiv vorgegebenen Steifigkeit eine hohe Präzision und eine hohe Abtragsleistung gewährleistet werden. Der Arbeitsraum 24 ist gut zugänglich, da der Werkstückhalter 30 und der Werkzeughalter 34 jeweils an eine Rückseite des Arbeitsraums 24 mittelbar oder unmittelbar am Gestellblock 16 sowie am Untergestell 14 des Gestells 12 angeordnet und gelagert sind. Damit stehen grundsätzlich drei Seiten (Vorderseite sowie zwei seitliche Seiten) für einen horizontalen Zugang zum Arbeitsraum 24 zur Verfügung. Ferner sind grundsätzlich auch eine Oberseite und eine Unterseite des Arbeitsraums 24 zumindest eingeschränkt nutzbar, etwa zur Handhabung von Kühlmittel, zum Späne-Management und für weitere Zwecke.

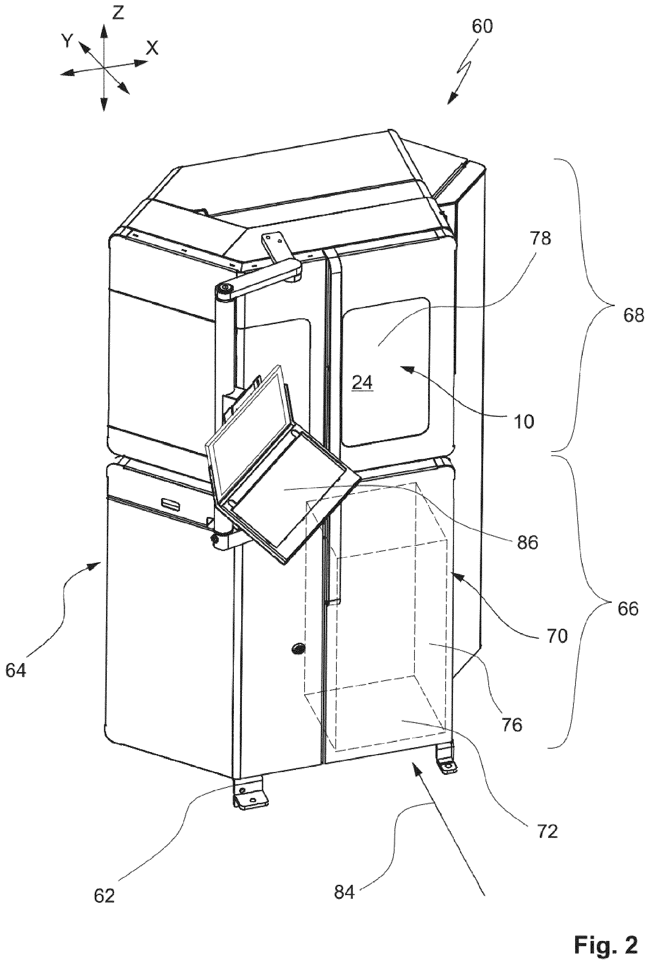

Fig. 2 veranschaulicht anhand einer perspektivischen Darstellung ein insgesamt mit 60 bezeichnetes Fertigungssystem, das eine Werkzeugmaschine 10 beherbergt, die etwa gemäß Fig. 1 gestaltet ist. Das Fertigungssystem 60 umfasst ein Gestell 62 und ein im Ausführungsbeispiel schrankartig gestaltete Einhausung 64. Die Einhausung 64 kann auch als Gehäuse bezeichnet werden. Die Einhausung 64 ist in einer beispielhaften Ausgestaltung etwa mannshoch gestaltet. Im Ausführungsbeispiel ist das Fertigungssystem 60 kompakt gestaltet, wobei das Fertigungssystem 60 ein Layout aufweist, das einem Hochschrank vergleichbar ist. Dies ist nicht einschränkend zu verstehen. Das Gestell 62 kann auch als Basisgestell des Fertigungssystems 60 bezeichnet werden. Am oder auf dem Gestell 62 ist wiederum das in Fig. 1 veranschaulichte Gestell 12 (auch: Werkzeugmaschinengestell) der Werkzeugmaschine 10 angeordnet.

Die in Fig. 2 gezeigte Gestaltung des Fertigungssystems 60 umfasst ein Unterteil 66 und ein darauf angeordnetes Oberteil 68, die beispielhaft verschiedene Baugruppen des Fertigungssystems 60 beherbergen und räumlich voneinander trennen. Das Fertigungssystem 60 umfasst neben der Werkzeugmaschine 10 eine Vorrichtung 70 zur Späneabführung. Die Vorrichtung 70 kann auch als Späneabführvorrichtung bezeichnet werden. Im Ausführungsbeispiel beherbergt das Unterteil 66 die Vorrichtung 70. Die Vorrichtung 70 stellt einen Spänewagen-Stellplatz 72 (in Fig. 2 gestrichelt angedeutet) für einen Spänewagen bereit. Die Vorrichtung 70 ist durch eine Tür 76 der Einhausung 64 verschließbar. In ähnlicher Weise ist die Werkzeugmaschine 10 (bzw. deren Arbeitsraum 24) durch eine Tür 78 der Einhausung 64 verschließbar.

Die Werkzeugmaschine 10 ist mit ihrem Arbeitsraum 24 dem Oberteil 68 des Fertigungssystems 60 zugeordnet. Damit ist die Werkzeugmaschine 10 in einer günstigen Höhe für einen stehenden oder sitzenden Bediener angeordnet. Die Vorrichtung 70 zur Späneabführung ist dem Unterteil 66 des Fertigungssystems 60 zugeordnet. Die Vorrichtung 70 ist unterhalb des Arbeitsraums 24 der Werkzeugmaschine 10 angeordnet.

In Fig. 2 ist durch einen mit 84 bezeichneten Pfeil eine Vorderseite des Fertigungssystems 60 bzw. der Werkzeugmaschine 10 angedeutet. Ein Bediener, der das Fertigungssystem 60 an der Vorderseite 84 bedient, kann beispielsweise über die Türen 76, 78 die Werkzeugmaschine 10 und die Vorrichtung 70 zur Späneabführung beobachten und bedienen. Ferner ist in Fig. 2 eine mit 86 bezeichnete Bedienkonsole zur Steuerung des Fertigungssystems 60 dargestellt, die ebenso der Vorderseite 84 zugewandt ist. Die Bedienkonsole 86 ist der Steuereinrichtung 18 zugeordnet und/oder mit dieser gekoppelt. Die Kompaktheit der Werkzeugmaschine 10 und des damit versehenen Fertigungssystems 60 vereinfacht die Bedienung. Relevante Komponenten des Fertigungssystems 60 können vom Bediener an der Vorderseite 84 eingesehen und erreicht werden.

Ferner erlaubt die schrankartige Gestaltung mit dem Unterteil 66 und dem Oberteil 68 eine Anordnung des Spänewagen-Stellplatzes 72 unterhalb des Arbeitsraums 24, dies gilt auch bei Betrachtung entlang der Vertikalen (vergleiche den Pfeil Z im Koordinatensystem X-Y-Z). Von oben betrachtet verdeckt der Arbeitsraum 24 dem Spänewagen-Stellplatz 72 teilweise oder vollständig, zumindest in beispielhaften Ausgestaltungen.

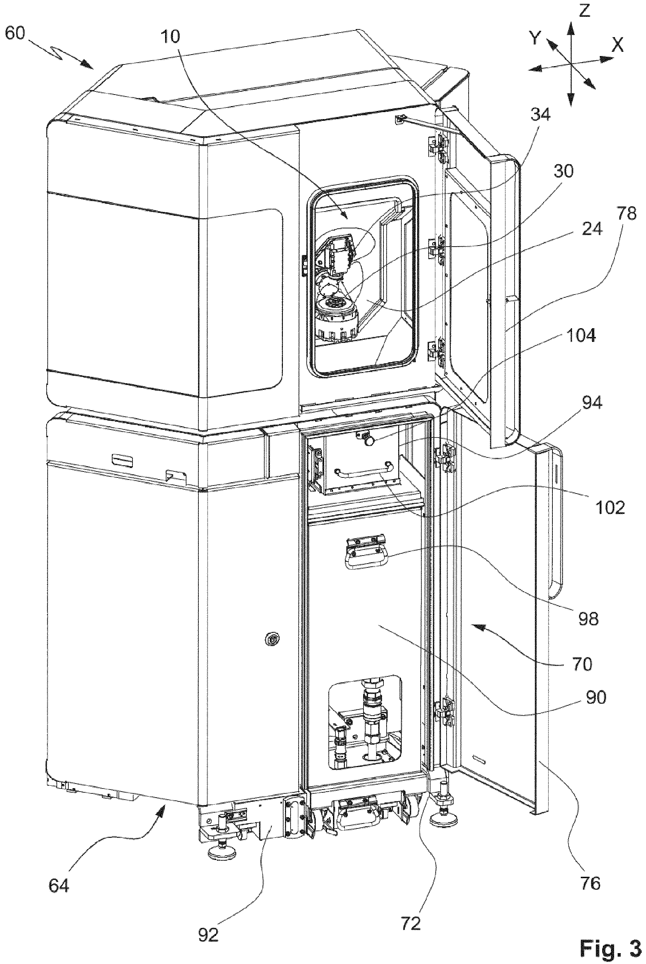

Die Figuren 3-5 veranschaulichen weitere Komponenten der Vorrichtung 70 und deren Zusammenwirken mit der Werkzeugmaschine 10. Die Figuren 2-5 zeigen das Fertigungssystem 60 bzw. Komponenten davon aus der jeweils gleichen Perspektive (von schräg oben an der Vorderseite 84). In Fig. 2 ist die Einhausung 64 geschlossen. In Fig. 3 sind zumindest die Türen 76 und 78 der Einhausung 64 geöffnet. Bei geöffneter Tür 78 ist der Arbeitsraum 24 der Werkzeugmaschine 10 für einen an der Vorderseite 84 angeordneten Bediener zugänglich. Im Arbeitsraum 24 sind der Werkstückhalter 30 und der Werkzeughalter 34 angeordnet und relativ zueinander verfahrbar.

Bei geöffneter Tür 76 ist die Vorrichtung 70 zugänglich. Am Spänewagen-Stellplatz 72 ist ein Spänewagen 90 platziert, der bedarfsweise aus dem Spänewagen-Stellplatz 72 herausfahrbar ist. Dies ist etwa dann der Fall, wenn der Spänewagen 90 vollständig mit Spänen und sonstigem Abrieb befüllt ist. Der Spänewagen 90 ist im Ausführungsbeispiel zumindest teilweise oberhalb einer KSS-Wanne 92 zur Aufnahme von Kühlschmierstoffen und ähnlichem angeordnet. Dies kann sich auch auf Kühlschmiermittel oder Kühlschmierstoffe (KSS) beziehen, die mit Spänen im Spänewagen 90 vermengt sind und in Richtung auf die KSS-Wanne 92 abfließen.

Der Arbeitsraum 24 der Werkzeugmaschine 10 ist über ein Verbindungsstück 94 mit dem Spänewagen 90 verbunden. Auf diese Weise können Späne möglichst direkt aus dem Arbeitsraum 24 in dem Spänewagen 90 fallen. Dies erfolgt vorzugsweise durch Schwerkraft bedingt und ohne zusätzlichen (angetriebenen) Späneförderer.

Am Spänewagen 90 ist ein Griff 98 ausgebildet. Das Verbindungsstück 94 weist zu Handhabungszwecken einen Griff 102 und ein Rastelement 104 auf. Der Spänewagen 90 kann am Griff 98 aus dem Spänewagen-Stellplatz 72 in der Einhausung 64 herausgezogen werden. Die Handhabungselemente erlauben ein zügiges und einfaches Wechseln oder Entleeren des Spänewagens 90. Der Spänewagen 90 ist vollständig unterhalb des Arbeitsraums 24 angeordnet. Dies wird durch die erhabene Anordnung der Werkzeugmaschine 10 im Oberteil 68 der Einhausung 64 ermöglicht. Dies wird wiederum durch die kompakte Gestaltung der Werkzeugmaschine 10 erleichtert.

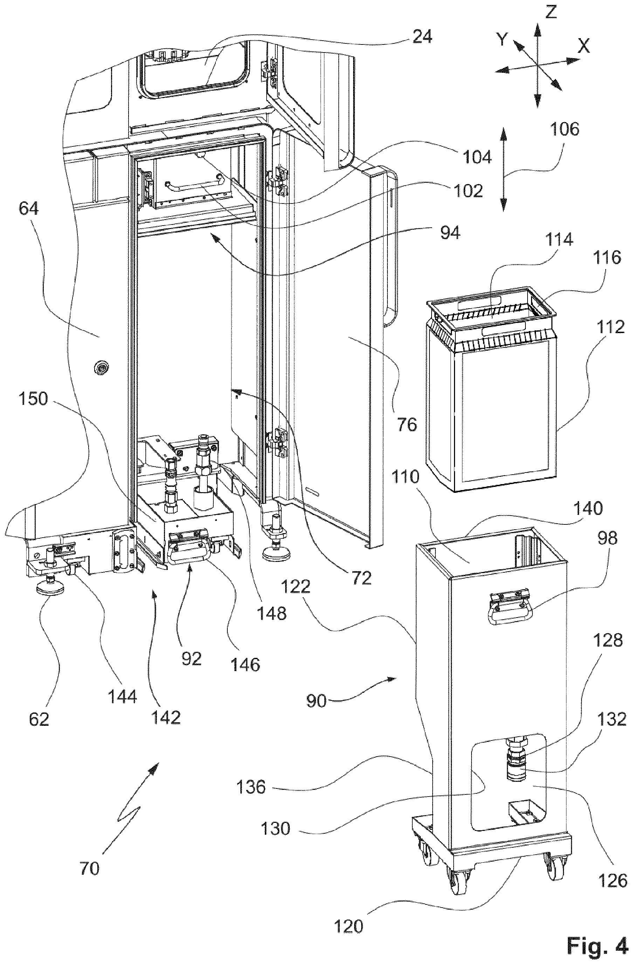

Fig. 4 zeigt eine Teilansicht der Einhausung 64 mit geöffneter Tür 76 zur weiteren Veranschaulichung von Komponenten der Vorrichtung 70. In Fig. 4 ist der Spänewagen 90 aus dem Spänewagen-Stellplatz 72 in der Einhausung 64 herausgefahren. Dies ist ermöglicht, wenn sich das Verbindungsstück 94 in einer Freigabestellung befindet. Das Verbindungsstück 94 ist vertikal zwischen der Freigabestellung und einer Betriebsstellung verschiebbar, vergleiche einen mit 106 bezeichneten Doppelpfeil in Fig. 4. Zur Handhabe dient der Griff 102. Mit dem Rastelement 104 kann das Verbindungsstück 94 in der Freigabestellung verrastet oder verriegelt werden.

Der Spänewagen 90 stellt eine Aufnahme 110 für einen Spänekorb 112 bereit. Der Spänekorb 112 ist in beispielhaften Ausgestaltungen aus der Aufnahme 110 entnehmbar. Demgemäß kann der Spänewagen 90 bedarfsweise im gesamten gewechselt werden, es kann also ein voller Spänewagen 90 durch einen leeren Spänewagen 90 ersetzt werden. Es ist jedoch auch möglich, lediglich den Spänekorb 112 zu wechseln oder auszuleeren, wenn der Spänewagen 90 aus dem Spänewagen-Stellplatz 72 herausgefahren ist. Der Spänekorb 112 weist eine Öffnung 114 auf, über die Späne aus dem Arbeitsraum 24 in den Spänekorb 112 fallen können. Hierzu passieren die Späne das Verbindungsstück 94. Ferner ist beim Spänekorb 112 im Ausführungsbeispiel zumindest ein Griff 116 vorgesehen, so dass auch der Spänekorb 112 separat handhabbar ist.

Der Spänewagen 90 weist an seinem unteren Ende ein Fahrwerk 120 auf, das einen Aufbau 122 trägt. Der Aufbau 122 umgibt die Aufnahme 110. Im Bereich der Aufnahme 110 für den Spänekorb 112 ist der Aufbau 122 etwa kastenförmig gestaltet und nach oben geöffnet. Am Aufbau 122 ist der Griff 98 befestigt. Die Aufnahme 110 ist oberhalb eines KSS-Handhabungsabschnitts 126 angeordnet. Der KSS-Handhabungsabschnitt 126 ist zwischen dem Fahrwerk 120 und der Aufnahme 110 angeordnet. Im KSS-Handhabungsabschnitt 126 ist eine KSS-Abführleitung 128 angeordnet, über die überschüssiges Kühlschmiermittel aus dem Spänekorb 112 in Richtung auf die KSS-Wanne 92 abtropfen oder abfließen kann. Der KSS-Handhabungsabschnitt 126 umfasst eine Bedienöffnung 130, über die zumindest die KSS-Abführleitung 128 zugänglich ist, die im Ausführungsbeispiel eine Schnellkupplung 132 umfasst.

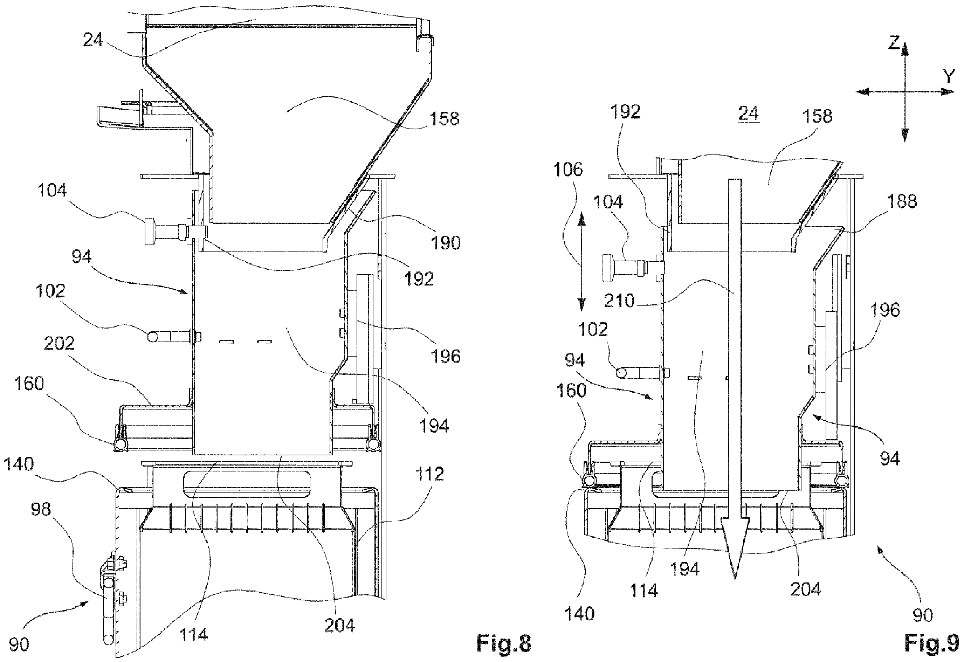

Im Bereich des KSS-Handhabungsabschnitts 126 weist der Aufbau 122 des Spänewagens 90 eine rückwärtige Rahmenaussparung 136 auf. Dies erlaubt eine günstige Anordnung des Spänewagens 90 in Bezug auf die KSS-Wanne 92 in der Einhausung 64 des Fertigungssystems 60. In Richtung auf das Verbindungsstück 94 weist der Spänewagen 90 einen umlaufenden Rand 140 auf, der vom Verbindungsstück 94 in der Betriebsstellung (vergleiche Fig. 9) kontaktiert wird, um den Spänewagen 90 zur Späneabführung hinreichend dicht mit dem Arbeitsraum 24 zu koppeln.

Die KSS-Wanne 92 ist in Fig. 4 an einem Unterflur-Stellplatz 142 angeordnet. Die KSS-Wanne 92 ist insbesondere unterhalb des Spänekorbs 112 angeordnet, wenn der Spänewagen 90 im Spänewagen-Stellplatz 72 platziert ist. Im Ausführungsbeispiel ist die KSS-Wanne 92 auf einem Fahrwerk 144 gelagert und folglich aus dem Unterflur-Stellplatz 142 herausfahrbar. Dies wird durch einen Griff 146 vereinfacht. Die KSS-Wanne 92 weist eine KSS-Leitung 148 auf, die mit der KSS-Abführleitung 128 koppelbar ist, wenn die KSS-Wanne 92 und der Spänewagen 90 an ihrem jeweiligen Stellplatz 72, 142 angeordnet sind. Die KSS-Wanne umfasst einen KSS-Behälter 150, in den die KSS-Leitung 148 mündet. Der KSS-Behälter 150 ist im Vergleich zum Spänekorb 112 flacher aber mit größerer Grundfläche gestaltet. Auf diese Weise weisen sowohl der Spänekorb 112 als auch der KSS-Behälter 150 ausreichende Aufnahmekapazitäten auf.

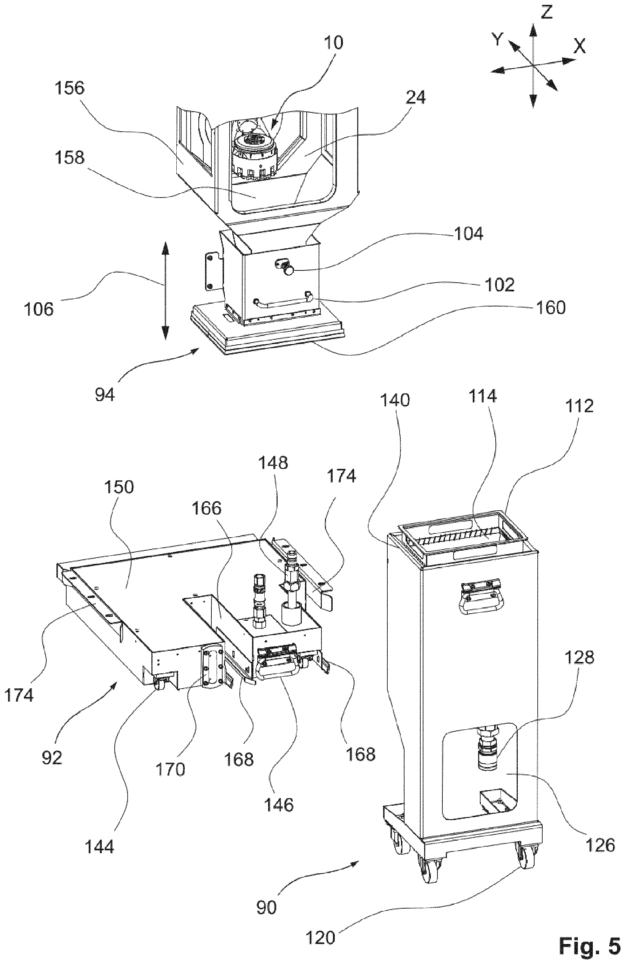

Die Darstellung in Fig. 5 beruht auf den Darstellungen gemäß den Figuren 2-4, wobei in Fig. 5 die Einhausung 64 nicht gezeigt ist. In Fig. 5 ist der Arbeitsraum 24 der Werkzeugmaschinen 10 und eine diesen umgebende Arbeitsraumverkleidung 156 zumindest teilweise dargestellt. Der Arbeitsraum 24 weist eine Spanabführöffnung 158 auf, die im Ausführungsbeispiel als Spänetrichter an einem unteren Ende der Arbeitsraumverkleidung 156 gestaltet ist. Das Verbindungsstück 94 koppelt an die Spanabführöffnung 158 an und umgibt diese zumindest abschnittsweise.

Das Verbindungsstück 94 trägt an seinem dem Spänewagen 90 zugewandten Ende eine Dichtung 160, die in der Betriebsstellung (vergleiche Fig. 9) auf dem umlaufenden Rand 140 des Spänewagens 90 aufliegt. Dies erlaubt eine hinreichend dichte Verbindung zwischen dem Verbindungsstück 94 und dem Spänewagen 90. Es versteht sich, dass die Dichtung 160 grundsätzlich auch beim Spänewagen 90 angeordnet sein könnte.

Die KSS-Wanne 92 mit dem KSS-Behälter 150 kann funktional über die KSS-Leitung 148 mit der KSS-Abführleitung 128 im KSS-Handhabungsabschnitt 126 des Spänewagens 90 verbunden werden. Der KSS-Behälter 150 ist zumindest abschnittsweise (in Draufsicht) U-förmig gestaltet, so dass der KSS-Behälter 150 zumindest eine Aussparung 166 umgibt, in die das Fahrwerk 120 des Spänewagens 90 (beispielsweise halbseitig mit einer Spur) einfahren kann. Beispielsweise ist das Fahrwerk 120 des Spänewagens 90 in Draufsicht U-förmig gestaltet, wobei auch der KSS-Behälter 150 in Draufsicht U-förmig gestaltet ist, aber mit um 180° verschwenkten Orientierung. Die beiden "U-Formen" können demgemäß ineinander einrücken. Dies reduziert den vertikalen Bauraumbedarf.

Die KSS-Wanne 92 umfasst im Ausführungsbeispiel Führungen 168 für das Fahrwerk 120 des Spänewagens 90. Mit anderen Worten bildet der KSS-Behälter 150 im Ausführungsbeispiel zumindest einen Teil des Spänewagen-Stellplatzes 72 aus. Ferner ist in Fig. 5 mit 170 eine Füllstandsanzeige für den KSS-Behälter angedeutet. In Fig. 5 sind ferner seitliche Führungen 174 für die KSS-Wanne 92 gezeigt, die fest mit dem Gestell 62 (in Fig. 5 nicht gezeigt) verbunden sind und eine Begrenzung des Unterflur-Stellplatzes 142 für die KSS-Wanne 92 bilden.

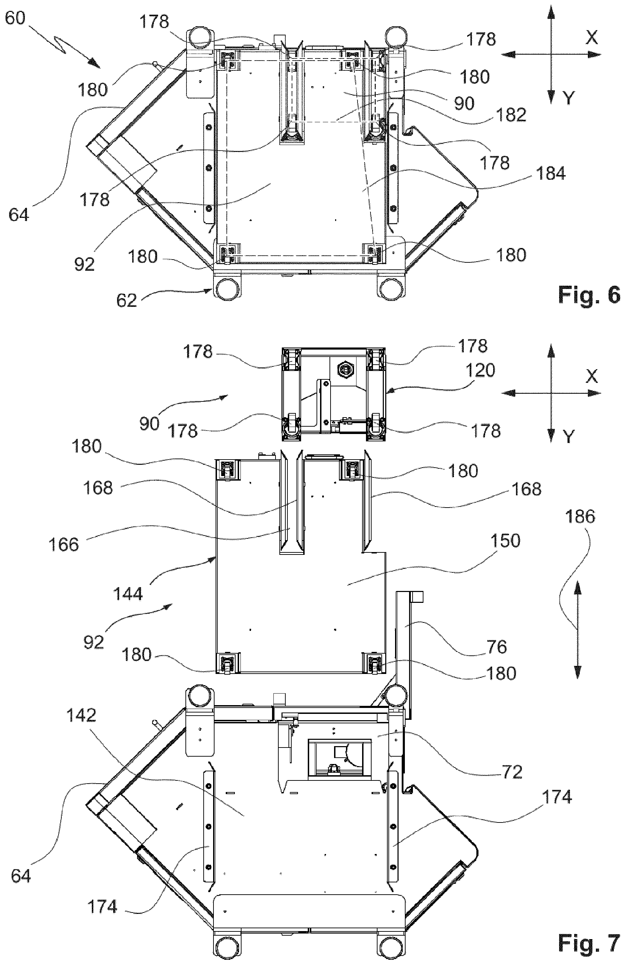

Die Figuren 6 und 7 zeigen vertikale Ansichten (von unten her) auf das Fertigungssystem 60 mit dem Spänewagen 90 und der KSS-Wanne 92. In Fig. 6 sind der Spänewagen 90 und die KSS-Wanne 92 in ihrem jeweiligen Stellplatz 72, 142 angeordnet. Der Spänewagen 90 und die KSS-Wanne 92 sind in die am Gestell 62 aufgenommene Einhausung 64 integriert bzw. von dieser beherbergt (umschlossen oder abgedeckt). In Fig. 7 sind bei geöffneter Tür 76 der Spänewagen 90 und die KSS-Wanne 92 aus ihren Stellplätzen 72, 142 herausgefahren. Dies erfolgt an der Vorderseite des Fertigungssystems 60, vergleiche den Pfeil 84 in Fig. 2.

Im Ausführungsbeispiel weist das Fahrwerk 120 des Spänewagens 90 vier Rollen 178 auf, die eine Fläche 182 bilden, vergleiche Fig. 6. Ferner weist im Ausführungsbeispiel das Fahrwerk 144 der KSS-Wanne vier Rollen 180 auf, die eine Fläche 184 bilden. Die Flächen 182, 184 sind beispielhaft durch die jeweiligen Koppelpunkte der Rollen 178, 180 mit dem Fahrwerk 120, 144 definiert. Die Flächen 182, 184 sind horizontal orientiert. Die Fläche 182 des Spänewagens 90 ist zumindest teilweise (oder gegebenenfalls vollständig) innerhalb der Fläche 184 der KSS-Wanne 92 angeordnet. Dies veranschaulicht die verschränkte (oder gegebenenfalls überlappende) Gestaltung unter günstiger Ausnutzung des gegebenen Bauraums (Standfläche des Fertigungssystems 60).

Fig. 7 veranschaulicht die Führungen 168, die die KSS-Wanne für das Fahrwerk 120 des Spänewagens 90 bereitstellt. Ferner ist die Aussparung 166 gezeigt, die im KSS-Behälter 150 ausgebildet ist. Dort können zwei hintereinander angeordnete Rollen 178 des Fahrwerks 120 des Spänewagens 90 einfahren. Ferner veranschaulicht Fig. 7 die mit dem Gestell 62 gekoppelten Führungen 174 für die KSS-Wanne. Die Führungen 174 begrenzen den Unterflur-Stellplatz 142. In Fig. 7 veranschaulicht ein mit 186 bezeichneter Doppelpfeil die jeweilige Fahrtrichtung des Spänewagens 90 und der KSS-Wanne 92 beim Einfahren und Ausfahren.

Die Figuren 8 und 9 veranschaulichen anhand geschnittener Darstellungen die Freigabestellung (Fig. 8) und die Betriebsstellung (Fig. 9) des Verbindungsstücks 94. Das Verbindungsstück 94 ist oberhalb des Spänewagens 90 und unterhalb des Arbeitsraums 24 angeordnet, vergleiche die vertikale Z-Achse in Fig. 9. Die Spanabführöffnung 158 des Arbeitsraums mündet in das Verbindungsstück 94. Ein Rand 188 des Verbindungsstücks 94 umgibt bzw. überlappt die Spanabführöffnung 158. Im Ausführungsbeispiel ist ferner ein Zwischenstück 190 vorgesehen, das Bestandteil der Spanabführöffnung 158 ist. Die Spanabführöffnung 158 ist insgesamt etwa trichterförmig gestaltet und in Richtung auf den Spänewagen 90 verjüngt.

Am Verbindungsstück 94 ist das Rastelement 104 aufgenommen, das in Fig. 8 in eine Aussparung 192 der Spanabführöffnung 158 bzw. des Zwischenstücks 190 eingerückt ist. Auf diese Weise ist das Verbindungsstück 94 in der in Fig. 8 gezeigten Freigabestellung gesichert. In der in Fig. 9 gezeigten Betriebsstellung ist das Rastelement 104 aus der Aussparung 192 ausgerückt. In diesem Zustand kann das Verbindungsstück 94 vertikal verfahren werden (vergleiche den Doppelpfeil 106). Durch das Eigengewicht kann das Verbindungsstück 94 in Richtung auf den Spänewagen 90 fahren. Die Bewegung kann auch über den Griff 102 erfolgen. Das Verbindungsstück 94 bildet einen Kanal 194 für den Spänetransfer aus. Im Ausführungsbeispiel gemäß den Figuren 8 und 9 ist zur Vereinfachung der vertikalen Stellbewegung eine Hubführung 196 vorgesehen, über die das Verbindungsstück 94 gestellseitig vertikal verschieblich geführt ist.

In Richtung auf den Spänewagen 90 ist beim Verbindungsstück 94 ein Kragen 202 vorgesehen, insbesondere ein umlaufender Kragen 202. Der Kragen 202 trägt die Dichtung 160. In der Betriebsstellung gemäß Fig. 9 liegt das Verbindungsstück 94 mit der Dichtung 160 hinreichend dicht auf dem umlaufenden Rand 140 des Spänewagens 90 auf. Gleichfalls ist eine (untere) Mündung 204 des Verbindungsstücks 94 zumindest teilweise in die Öffnung 114 des Spänekorbs 112 eingerückt. Auf diese Weise wird sichergestellt, dass entlang eines Spanabfuhrpfades 210 zwischen dem Arbeitsraum 24 und dem Spänewagen 90 Späne sicher entlang des Kanals 194 durch das Verbindungsstück 94 in den Spänekorb 112 des Spänewagens 90 geleitet werden.

## Patentansprüche

1. Vorrichtung (70) zur Späneabführung für eine Werkzeugmaschine (10), die Folgendes aufweist:
- einen verfahrbaren Spänewagen (90) mit einer Aufnahme (110) für einen aus dem Spänewagen (90) entnehmbaren Spänekorb (112),
- einen in eine Einhausung (64) der Werkzeugmaschine (10) integrierten Spänewagen-Stellplatz (72) für den Spänewagen (90), insbesondere unterhalb eines Arbeitsraums (24) der Werkzeugmaschine (10), und
- ein Verbindungsstück (94) zwischen einer Öffnung (114) des Spänekorbs (112) und einer Spanabführöffnung (158) des Arbeitsraums (24) zur Spanabführung aus dem Arbeitsraum (24),
wobei das Verbindungsstück (94) zwischen einer Freigabestellung, in der der Spänewagen (90) aus dem Spänewagen-Stellplatz (72) heraus verfahrbar ist, und einer Betriebsstellung, in der das Verbindungsstück (94) und der Spänewagen (90) zum Spänetransfer aus dem Arbeitsraum (24) in den Spänewagen (90) gekoppelt sind, verlagerbar ist.

2. Vorrichtung (70) nach Anspruch 1, wobei der Spänewagen (90) einen säulenförmig gestalteten Aufbau (122) aufweist, und wobei das Verbindungsstück (94) oberhalb des Spänewagens (90) und unterhalb des Arbeitsraums (24) sitzt.

3. Vorrichtung (70) nach Anspruch 1 oder 2, wobei aus Sicht der Spanabführöffnung (158) des Arbeitsraums (24) ein freier, schwerkraftunterstützter Spänetransfer in Richtung auf den Spänekorb (112) entlang eines Spanabführpfades (210) ermöglicht ist.

4. Vorrichtung (70) nach Anspruch 3, wobei der Spänetransfer zwischen der Spanabführöffnung (158) und dem Spänekorb (112) antriebslos erfolgt, und wobei sich insbesondere der Spanabführpfad (210) zwischen dem Arbeitsraum (24) und dem Spänekorb (112) im Wesentlichen vertikal erstreckt.

5. Vorrichtung (70) nach einem der Ansprüche 1-4, wobei das Verbindungsstück (94) vertikal verfahrbar ist, und wobei ein Rastelement (104) vorgesehen ist, das das Verbindungsstück (94) bedarfsweise in der Freigabestellung sichert.

6. Vorrichtung (70) nach einem der Ansprüche 1-5, wobei das Verbindungsstück (94) in der Betriebsstellung mit einer Dichtung (160), insbesondere einer umlaufenden Dichtung (160), auf einem Rand (140), insbesondere einem umlaufenden Rand (140), des Spänewagens (90) aufliegt, und wobei das Verbindungsstück (94) eine Mündung (204) in Richtung auf den Spänekorb (112) aufweist, die in der Betriebsstellung von oben in die Öffnung (114) des Spänekorbs (112) hineinragt.

7. Vorrichtung (70) nach einem der Ansprüche 1-6, wobei der Spänewagen (90) entlang seiner vertikalen Erstreckung ein Fahrwerk (120), einen KSS-Handhabungsabschnitt (126) und die Aufnahme (110) für den Spänekorb (112) aufweist, wobei der KSS-Handhabungsabschnitt (126) zwischen dem Fahrwerk (120) und der Aufnahme (110) angeordnet ist, wobei die Aufnahme (110) den Spänekorb (112) mehrseitig dicht umschließt, und wobei der KSS-Handhabungsabschnitt (126) eine Bedienöffnung (130) aufweist, die auch bei auf dem Spänewagen-Stellplatz (72) angeordnetem Spänewagen (90) für einen Bediener zugänglich ist.

8. Vorrichtung (70) nach Anspruch 7, wobei im KSS-Handhabungsabschnitt (126) eine KSS-Abführleitung (128) mit einer Schnellkupplung (132) angeordnet ist, die durch die Bedienöffnung (130) hindurch bedienbar ist.

9. Vorrichtung (70) nach einem der Ansprüche 1-8, wobei zumindest die Aufnahme (110) des Spänewagens (90) oberhalb einer verfahrbaren KSS-Wanne (92) angeordnet ist, und wobei die KSS-Wanne (92) zumindest eine Aussparung (166) für den Spänewagen (90), insbesondere für ein Fahrwerk (120) des Spänewagens (90) aufweist.

10. Vorrichtung (70) nach Anspruch 9, ferner aufweisend einen Unterflur-Stellplatz (142) für die verfahrbare KSS-Wanne (92), wobei die KSS-Wanne (92) aus dem Unterflur-Stellplatz (142) herausfahrbar ist, wenn der Spänewagen (90) aus dem Spänewagen-Stellplatz (72) herausgefahren ist.

11. Vorrichtung (70) nach Anspruch 9 oder 10, wobei die KSS-Wanne (92) und das Fahrwerk (120) des Spänewagens (90) zumindest abschnittsweise miteinander verschränkt angeordnet sind.

12. Vorrichtung (70) nach Anspruch 11, wobei das Fahrwerk (120) des Spänewagens (90) zumindest drei Rollen (178) umfasst, deren Verbindungspunkte (120) mit dem Fahrwerk (120) eine erste Fläche (182) aufspannen, wobei die KSS-Wanne (92) ein Fahrwerk (144) mit zumindest drei Rollen (180) aufweist, deren Verbindungspunkte mit dem Fahrwerk (144) eine zweite Fläche (184) aufspannen, und wobei sich die erste Fläche (182) und die zweite Fläche (184) in einer Draufsicht zumindest teilweise überlappen.

13. Vorrichtung (70) nach einem der Ansprüche 9-12, wobei die KSS-Wanne (92) einen KSS-Behälter (150) aufweist, der in einer Draufsicht zumindest abschnittsweise U-förmig gestaltet ist und von der Aussparung (166) unterbrochen ist, die für zumindest einen Abschnitt des Fahrwerks (120) des Spänewagens (90) zugänglich ist.

14. Fertigungssystem (60) für die spanende Fertigung, insbesondere zur Herstellung feinmechanischer Werkstücke, das Folgendes aufweist:
- zumindest eine insbesondere kompakt gestaltete Werkzeugmaschine (10), die zur Mehrachsbearbeitung ausgebildet ist, und die einen Werkzeughalter (34) und einen Werkstückhalter (30) aufweist, die relativ zueinander in einem Arbeitsraum (24) der Werkzeugmaschine (10) in zumindest drei Achsen verfahrbar sind, und
- eine Vorrichtung (70) zur Späneabführung nach einem der Ansprüche 1-13, die zumindest im Wesentlichen unterhalb des Arbeitsraums (24) angeordnet ist, wobei insbesondere der Spänewagen (90) in einer Draufsicht einen Querschnitt aufweist, der innerhalb einer Projektion eines Umrisses des Arbeitsraums (24) der Werkzeugmaschine (10) liegt.

15. Fertigungssystem (60) nach Anspruch 14, aufweisend eine schrankartige Einhausung (64), die ein Oberteil (68) und ein Unterteil (66) umgibt, wobei die Werkzeugmaschine (10) mit ihrem Arbeitsraum (24) im Oberteil (68) angeordnet ist, und wobei der Spänewagen (90) im Unterteil (66) unterhalb des Arbeitsraums (24) der Werkzeugmaschine (10) angeordnet ist.
